# EUROPEAN PATENT APPLICATION

(11) **EP 4 625 536 A1**
(43) Date of publication of application: **01.10.2025**
(21) Application number: 24852405.0
(22) Date of filing: 09.08.2024
(51) Int. Cl.: H01M 4/36, H01M 4/48, H01M 4/134, H01M 10/052, H01M 4/02

(54) **ANODE ACTIVE MATERIAL, ANODE COMPOSITION, ANODE, AND LITHIUM SECONDARY BATTERY**

(30) Priority: 09.08.2023 KR 20230103972
(71) Applicant: LG Energy Solution, Ltd., Seoul 07335 (KR)
(72) Inventor: PARK, Junhyoung, Daejeon 34122 (KR); KO, Minjin, Daejeon 34122 (KR); LEE, Jaewook, Daejeon 34122 (KR); KWON, Yohan, Daejeon 34122 (KR)
(74) Representative: Hoffmann Eitle
(86) International application number: PCT/KR2024/011893
(87) International publication number: WO 2025/034052

(57) **Abstract**

The present invention relates to an anode active material, an anode composition, an anode, a lithium secondary battery, a battery module, and a battery pack, each comprising porous silicon-carbon composite particles. The anode active material comprises: porous silicon-carbon composite particles comprising a porous carbon scaffold and silicon provided on at least a portion of an interior or surface of the porous carbon scaffold, wherein a content of the silicon is 35 to 60 parts by weight based on 100 parts by weight of the silicon-carbon composite particles, wherein a specific surface area of the silicon-carbon composite particles is 20 m²/g or less, and wherein a contact angle of the silicon-carbon composite particles with water, measured on a surface of a flat film after forming the flat film, is 90 degrees or greater.

## Description

### [Technical Field]

The present application claims priority to and the benefit of Korean Patent Application No. 10-2023-0103972 filed in the Korean Intellectual Property Office on August 9, 2023, the entire contents of which are incorporated herein by reference.

The present invention relates to a negative electrode active material, a negative electrode composition, a negative electrode, a lithium secondary battery, a battery module, and a battery pack.

### [Background Art]

Recently, with the rapid spread of electronic devices using batteries, such as mobile phones, laptop computers, electric vehicles, electrically-powered tools and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.

In the lithium secondary battery, in a state in which an organic electrolyte solution or a polymer electrolyte solution is filled between a positive electrode and a negative electrode each made of an active material capable of intercalation and deintercalation of lithium ions, electrical energy is produced by oxidation/reduction reactions at a time when lithium ions are intercalated/deintercalated into/from the positive electrode and the negative electrode.

Graphite is mainly used as a negative electrode active material of the lithium secondary battery. However, graphite has a low capacity per unit mass of 372 mAh/g, making it difficult to increase the capacity of the lithium secondary battery. Accordingly, in order to increase the capacity of the lithium secondary battery, negative electrode materials such as silicon, tin, and oxides thereof are being developed as non-carbon-based negative electrode materials having higher energy densities than graphite.

### [Detailed Description of the Invention]

### [Technical Problem]

While silicon-carbon composites have superior initial capacity and energy efficiency compared to graphite or silicon oxide, as the degree of silicon exposure of the silicon-carbon composite increases, the likelihood that the negative electrode composition containing the silicon-carbon composite will generate hydrogen gas due to a reaction with moisture during the manufacturing process or storage also increases. This may lead to coatability issues and pose a risk of explosion during long-term storage. Accordingly, exemplary embodiments of the present invention provide a negative electrode active material that addresses problems of reaction with moisture, a negative electrode composition including the same, and a negative electrode. In addition, exemplary embodiments of the present invention relate to a lithium secondary battery, a battery module, and a battery pack, which include the negative electrode described above.

### [Technical Solution]

An exemplary embodiment of the present invention provides a negative electrode active material including porous silicon-carbon composite particles including a porous carbon scaffold and silicon provided on at least a portion of an interior or surface of the porous carbon scaffold, wherein a content of the silicon is 35 to 60 parts by weight based on 100 parts by weight of the silicon-carbon composite particles, a specific surface area of the silicon-carbon composite particles is 20 m²/g or less, and a contact angle of the silicon-carbon composite particles with water, measured on a surface of a flat film after forming the flat film, is 90 degrees or greater.

According to an exemplary embodiment, an average diameter of pores of the porous silicon-carbon composite particle is 0.1 nm to 50 nm.

An exemplary embodiment of the present invention provides a negative electrode composition including the negative electrode active material.

An exemplary embodiment of the present invention provides a negative electrode for a lithium secondary battery, including: a current collector; and a negative electrode active material layer provided on at least one surface of the current collector and including the negative electrode composition.

An exemplary embodiment of the present invention provides a lithium secondary battery including the negative electrode; a separator; and a positive electrode.

An exemplary embodiment of the present invention provides a battery module including the lithium secondary battery.

An exemplary embodiment of the present invention provides a battery pack including the battery module.

### [Advantageous Effects]

According to the exemplary embodiments of the present invention, the initial capacity and energy efficiency of the lithium secondary battery can be significantly improved by the porous silicon-carbon composite particle having a specific structure, silicon content and specific surface area. At the same time, by controlling the particle to have a specific contact angle, the reaction with moisture during the manufacturing process of a negative electrode or during storage as a negative electrode composition can be minimized. Thereby, hydrogen gas generation is prevented, which can improve coatability, provide long-term storage stability, and address process defects and explosion risks due to hydrogen gas generation.

### [Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the average particle diameter D50 may be defined as a particle diameter corresponding to 50% of the cumulative volume on the particle size distribution curve of the particles (graph curve of the particle size distribution). The average particle diameter may be measured using, for example, a laser diffraction method. In the laser diffraction method, in general, particle diameters ranging from a submicron region to several millimeters can be measured, and results with high reproducibility and high resolvability can be obtained. The measurement of the average particle diameter may be confirmed using water and Triton-X100 dispersant with a Microtrac apparatus (manufacturer: Microtrac model name: S3500). Specifically, the average particle diameter of a positive electrode active material may be measured under a condition of a refractive index of 1.5 to 1.7, and the average particle diameter of a negative electrode active material may be measured under a condition of a refractive index of 1.97 or 2.42. For example, after dispersing particles in a dispersion medium, the resulting dispersion is introduced into a commercially available laser diffraction particle size measuring device and irradiated with an ultrasonic wave of about 28 kHz with an output of 60 W. Thereafter, a volume cumulative particle size distribution graph is obtained, and then the average particle diameter may be measured by obtaining the particle size corresponding to 50% of the volume cumulative amount.

Hereinafter, preferred embodiments of the present invention will be described in detail. However, it should be understood that the exemplary embodiments of the present invention may be modified in various forms and the scope of the present invention is not limited to the exemplary embodiments described below.

### <Negative Electrode Active Material>

An exemplary embodiment of the present invention relates to a negative electrode active material, which includes porous silicon-carbon composite particles.

The porous silicon-carbon composite particles have a structure including a porous carbon scaffold and silicon provided on at least a portion of an interior or surface of the porous carbon scaffold, and a content of the silicon is 35 to 60 parts by weight, preferably 40 to 60 parts by weight, or 45 to 55 parts by weight based on 100 parts by weight of the silicon-carbon composite particles.

According to an exemplary embodiment, a specific surface area of the porous silicon-carbon composite particles is 20 m²/g or less, 15 m²/g or less, 10 m²/g or less, or 5 m²/g or less. The specific surface area of the porous silicon-carbon composite particles may be 0.1 m²/g or greater, 1 m²/g or greater, 1.5 m²/g or greater, 2 m²/g or greater, or 3 m²/g or greater. The specific surface area refers to a total specific surface area of a substance measured by a BET technique. The BET (Brunauer/Emmett/Teller) technique employs an inert gas, for example nitrogen, to measure an amount of gas adsorbed on a material and is commonly used in the art to determine an accessible surface area of materials. For example, the specific surface area can be measured by performing degassing at 200°C for 8 hours using a BET measuring apparatus (BEL-SORP-MAX, Nippon Bell), and performing N₂ adsorption/desorption at 77 K. If the BET specific surface area of the silicon-carbon composite particles does not fall within the above range and exceeds 20 m²/g, the manufacturing stability decreases due to changes in physical properties of a negative electrode slurry, such as viscosity, over time during manufacturing and storage of the negative electrode composition. In addition, the coating processability may deteriorate due to generation of hydrogen gas caused by an increased reaction with moisture.

According to an exemplary embodiment, an average diameter of pores of the porous silicon-carbon composite particles is 0.1 nm to 50 nm. The porous carbon scaffold may include micropores with a diameter of less than 2 nm and mesopores with a diameter of 2 nm to 50 nm.

Particles with such microporosity can contain a relatively large amount of fine particles of silicon, and active particles can be electrically interconnected, so there are fewer problems of silicon particle breakage or electrical disconnection between active materials during charging and discharging, which is advantageous in improving the initial capacity and energy efficiency of the battery. However, if a large number of small particles of silicon are exposed in the pores or on the surface of the porous silicon-carbon composite particles, it may have a more detrimental effect on gas generation when in contact with moisture. In an exemplary embodiment of the present invention, as described above, the silicon-carbon composite particles have a microporous structure and an appropriate level of silicon content, and at the same time, a contact angle of the silicon-carbon composite particles with water measured on a surface of a flat film after forming the flat film is 90 degrees or greater, which can minimize or prevent the reaction between silicon and moisture.

According to an exemplary embodiment of the present invention, the porous structure, pore size, oxidation degree of carbon scaffold, silicon content, and contact angle of the porous silicon-carbon composite particles can be controlled by various factors such as a process temperature of the carbon scaffold and an input order and input amount of raw materials.

According to an exemplary embodiment of the present invention, the content of silicon in the porous silicon-carbon composite particles is 35 to 60 parts by weight, for example, 40 to 60 parts by weight or 40 to 55 parts by weight based on 100 parts by weight of the porous silicon-carbon composite particles. If the silicon content is less than 35 parts by weight, the initial capacity of the active material is not sufficiently high, and if the silicon content exceeds 60 parts by weight, it is difficult to form a structure in which hydrogen gas generation is suppressed. Within the above range of silicon content, the capacity and efficiency of the active material are appropriately secured, and gas generation in the slurry is easily suppressed.

According to an exemplary embodiment of the present invention, an average diameter of pores of the porous silicon-carbon composite particles may be 0.1 nm to 50 nm. When the average pore diameter falls within the range, there is no significant problem with silicon growth by silane gas, and problems such as degradation of life performance and volume expansion during charging and discharging can be minimized. The average pore diameter of the pores may be measured using a mercury porosimeter.

According to an exemplary embodiment of the present invention, the porous silicon-carbon composite particles may have a contact angle with water, measured on a surface of a flat film after forming the flat film, of 90 degrees or greater, for example, 95 degrees or greater, 100 degrees or greater, 105 degrees or greater, or 120 degrees or greater. The contact angle range is advantageous in preventing reaction with moisture. The contact angle may be measured using a contact angle measuring device, such as a device available from Pheonix MT, on the surface of the flat film after coating and flattening the particles. Rolling may be performed during the flattening.

In the present specification, the water contact angle is a characteristic (value) representing the reactivity (affinity) of silicon-carbon composite particles with water, and the water contact angle can be controlled within the above range by changing the moisture affinity of silicon-carbon composite particles by adjusting of a flow rate of silane gas, heat treatment temperature, the presence of carbon or other material coating, and coating thickness during the manufacturing process of silicon-carbon composite particles.

The fact that the water contact angle falls within the range means that the silicon-carbon composite particles have low reactivity with moisture. The negative electrode composition having the water contact angle within the range suppresses hydrogen gas generation during the manufacturing process, thereby improving and maintaining electrode coating processability and stability. In addition, since changes in the properties of the negative electrode slurry, such as viscosity, over time are suppressed, storage stability of the negative electrode composition is improved.

According to an exemplary embodiment of the present invention, the porous silicon-carbon composite particles may have an amount of gas generation of 4,000 µL/g or less when being left at 60°C for 24 hours in a state where they are dispersed in water at a concentration of 30 wt%. According to another exemplary embodiment, a negative electrode composition for a lithium secondary battery including the porous silicon-carbon composite particles may have an amount of gas generation of 4,000 µL/g or less when being left at 60°C for 24 hours. The amount of gas generation may vary depending on a composition ratio of Si and C in the active material particles, a degree of exposure of Si, and pH in the slurry, and specifically, may be affected by the component composition, structure, and size of the active material particles and the composition of the slurry.

Specifically, after dispersing the active material in water and leaving it at 60°C for a day, it is desirable to collect hydrogen (H₂) gas generated, to measure an amount thereof using GC/MS, and to limit the same to a certain amount or less. For example, for an active material aqueous dispersion with a concentration of 30 wt%, an appropriate amount of hydrogen gas is 4,000 µL/g or less, 2,000 µL/g or less, or 1,000 µL/g or less. In addition, for a slurry for electrode manufacturing, when the amount of hydrogen (H₂) gas generated after being left at 60°C for a day is 4,000 µL/g or less, 2,000 µL/g or less, or 1,000 µL/g or less, it is possible to minimize coating defects such as pin holes during electrode manufacturing, initial capacity reduction of the active material, and risk of explosion. By controlling the porous structure, silicon content, scaffold structure, and contact angle of the above particles within the specific ranges, the performance of the active material can be maintained, while the amount of gas generation measured by the above method can be controlled to 4000 µL/g or less, 2,000 µL/g or less, 1,000 µL/g or less, 500 µL/g or less, 300 µL/g or less, or 150 µL/g or less.

According to an exemplary embodiment of the present invention, a summed amount of carbon and silicon is 90 to 100 parts by weight based on 100 parts by weight of the porous silicon-carbon composite particles.

According to an exemplary embodiment of the present invention, an average particle diameter D50 of the porous silicon-carbon composite particles may be 1 µm to 20 µm, for example 1.5 µm to 15 µm, or 3 µm to 10 µm. When the particle diameter falls within the above range, the active material is appropriately dispersed during slurry manufacturing, and there are fewer problems of poor coating due to large particles when coating an electrode.

According to an exemplary embodiment of the present invention, a pore volume of the porous carbon scaffold included in the porous silicon-carbon composite particles exceeds 0.1 cm³/g, for example, exceeds 0.2 cm³/g, exceeds 0.5 cm³/g, for example, exceeds 0.7 cm³/g, for example, exceeds 1.0 cm³/g, for example, exceeds 1.5 cm³/g, for example, exceeds 2.0 cm³/g. A pore volume distribution of the porous carbon scaffold may be diverse. For example, the pores may include micropores, mesopores, and macropores, and the micropores may be 0 to 90%, the mesopores may be 5 to 90%, and the macropores may be 0 to 50%.

The porous silicon-carbon composite particles do not need to be manufactured by a specific manufacturing method and can be manufactured by a method known in the art. For example, the manufacturing of the porous silicon-carbon composite may be performed by a method including the steps of manufacturing a porous carbon scaffold (thermally decomposing a polymer to manufacture a porous carbon body) and causing silane gas to flow through the porous carbon scaffold and thermally decomposing it at high temperature to grow silicon inside the porous carbon scaffold. Depending on the purpose, a step of modifying a surface layer with carbon or another component can be further performed. In addition, as another example, Si and SiO₂ may be simultaneously deposited to manufacture Si-containing SiOₓ oxide (0 < x < 2), the oxide may be chemically etched to manufacture porous Si, and the porous Si may undergo heat treatment with carbon gas to manufacture porous Si/C.

### <Negative Electrode Composition and Negative Electrode>

A negative electrode composition according to an exemplary embodiment of the present invention includes the negative electrode active material.

In addition, a negative electrode for a lithium secondary battery according to an exemplary embodiment of the present invention includes a current collector; and a negative electrode active material layer provided on at least one surface of the current collector and including the negative electrode composition.

The negative electrode composition may further include a binder and a conductive material, but may further include a thickener if necessary.

The negative electrode active material layer may be formed by applying a negative electrode composition including a negative electrode active material, a binder, a thickener, and/or a conductive material to at least one surface of a current collector, and drying and roll-pressing the same.

The negative electrode composition may further include an additional negative electrode active material.

As the additional negative electrode active material, a compound capable of reversible intercalation and deintercalation of lithium may be used. Specific examples include a carbonaceous material such as artificial graphite, natural graphite, graphitized carbon fiber, and amorphous carbon; a metallic compound capable of being alloyed with lithium, such as Si, Al, Sn, Pb, Zn, Bi, In, Mg, Ga, Cd, Si alloys, Sn alloys, or Al alloys; metallic oxides capable of doping and undoping lithium, such as SiO_{β}(0<β<2), SnO₂, vanadium oxide, lithium titanium oxide, and lithium vanadium oxide; or a composite including the metallic compound and the carbonaceous material, such as a Si-C composite or a Sn-C composite, and any one thereof or a mixture of two or more thereof may be used.

Additionally, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite, pyrolytic carbon, mesophase pitch based carbon fiber, meso-carbon microbeads, mesophase pitches, and high-temperature fired carbon such as petroleum- or coal tar pitch-derived cokes.

The additional negative electrode active material may be a carbon-based negative electrode active material, for example graphite.

In an exemplary embodiment of the present invention, a weight ratio of the negative electrode active material and the additional negative electrode active material included in the negative electrode composition may be 1:99 to 99:1, and specifically 10:90 to 90:10, for example 5:95 to 50:50 or 10:90 to 30:70.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 µm to 20 µm. However, the thickness of the current collector is not limited thereto.

The binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which hydrogen is substituted with Li, Na, Ca, etc., and may also include various copolymers thereof, for example copolymers containing acrylamide or acrylonitrile.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon; metal powders such as aluminum, and nickel powder; a conductive whisker such as zinc oxide and potassium titanate; a conductive metal oxide such as titanium oxide; a conductive material such as polyphenylene derivative, and the like may be used.

The thickener may be carboxymethylcellulose (CMC), but is not limited thereto, and thickeners used in the art may be appropriately adopted.

In an exemplary embodiment of the present invention, the entire negative electrode active materials included in the negative electrode composition may be included in an amount of 60 to 99 parts by weight, and specifically 70 to 98 parts by weight based on 100 parts by weight of a total solid content of the negative electrode composition.

In an exemplary embodiment of the present invention, the binder may be included in an amount of 0.5 to 30 parts by weight, and specifically 1 to 20 parts by weight based on 100 parts by weight of the total solid content of the negative electrode composition.

In an exemplary embodiment of the present invention, the conductive material may be included in an amount of 0.5 to 25 parts by weight, specifically 1 to 20 parts by weight based on 100 parts by weight of the total solid content of the negative electrode composition.

In an exemplary embodiment of the present invention, the thickener may be included in an amount of 0.5 to 25 parts by weight, specifically 0.5 to 20 parts by weight, and more specifically 1 to 20 parts by weight based on 100 parts by weight of the total solid content of the negative electrode composition.

The negative electrode composition according to an exemplary embodiment of the present invention may further include a solvent for negative electrode composition formation. Specifically, the solvent for negative electrode composition formation may include at least one selected from the group consisting of distilled water, ethanol, methanol, and isopropyl alcohol, and specifically, distilled water, in terms of facilitating dispersion of components.

In an exemplary embodiment of the present invention, the solid content of the negative electrode composition may be 20 to 75 parts by weight, and specifically 30 to 70 parts by weight based on 100 parts by weight of the total negative electrode composition.

### <Secondary Battery>

A secondary battery according to an exemplary embodiment of the present invention may include the negative electrode according to an exemplary embodiment of the present invention described above. Specifically, the secondary battery may include a negative electrode, a positive electrode, and a separator interposed between the positive electrode and the negative electrode, and may further include an electrolyte solution. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.5); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.1) or Li₂Mn₃MO₈ (where M is at least one selected from the group consisting of Fe, Co, Ni, Cu and Zn); LiMn₂O₄ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte solution ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte solution may include an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacturing of the lithium secondary battery, but are not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte solution with high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving life characteristics of the battery, suppressing a decrease in battery capacity, improving discharge capacity of the battery, and the like, in addition to the above-described electrolyte solution components.

Another exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### Mode for Invention

### <Examples and Comparative Examples>

### Example 1

0.5 g of amorphous porous carbon scaffold with a specific surface area of 1500 to 1800 m²/g and pore volume 0.7 to 0.85 cm³/g was placed in a ceramic crucible, which was then placed at the center of a horizontal tube furnace. After sealing the furnace and purging it with nitrogen gas, the furnace temperature was increased to 400 to 500°C at a rate of 10°C/min, and silane gas and hydrogen gas were stayed for 10 to 30 minutes while varying the flow rates. Additionally, the furnace temperature was increased to 780 to 830°C at a rate of 10°C/min, and then propane gas was stayed for 10 to 30 minutes while varying the flow rate, resulting in preparation of a porous silicon-carbon composite having the characteristics shown in Table 1.

### Example 2

The same procedure as in Example 1 was performed, except that the silane flow rate was increased so that the silicon content in the porous silicon-carbon composite was 52 parts by weight.

### Comparative Example 1

The same procedure as in Example 1 was performed, except that, the final heating temperature in Example 1, was lowered and the contact angle was made to be 78 degrees.

### Comparative Example 2

The same procedure as in Example 1 was performed, except that the silane flow rate was reduced so that the silicon content in the porous silicon-carbon composite was 33 parts by weight.

### Comparative Example 3

The same procedure as in Example 1 was performed, except that the first heating temperature was increased, the silane flow rate was decreased, and the staying time was increased so that the silicon content in the porous silicon-carbon composite was 62 parts by weight.

### Comparative Example 4

The same procedure as in Example 1 was performed, except that the silane flow rate was adjusted so that the silicon content in the porous silicon-carbon composite was 44 parts by weight, and the particles were pulverized so that the specific surface area was 25 m²/g.

The silicon content, contact angle, and amount of gas generation of the porous silicon-carbon composites prepared in the Examples and Comparative Examples were measured by the following methods, and the results are shown in Table 1.
- Silicon content: The silicon content of the composite was measured by thermally decomposing carbon using a TGA thermal analyzer and measuring the weight.
- Contact angle: A double-sided tape was attached to a flat substrate, and the porous silicon-carbon composite particle powder was coated on it. After flattening with a 1 Kgf/mm pressing roll to form a flat film, the contact angle with water was measured using a contact angle meter available from Pheonix MT.
- Amount of gas generation: 5g of an active material or slurry was placed in a 9 cm x 9 cm pouch, which was then sealed and stored at high temperature (60°C) for 24 hours in a constant temperature chamber. Thereafter, the gas inside the pouch was collected and the amount of gas generation was measured using GC/MS.

**[Table 1]**

| | silicon content (based on 100 parts by weight of particles) | Specific surface area (m²/g) | Contact angle (°) | Amount of active gas generation (µL) |
|---|---|---|---|---|
| Example 1 | 48 | 4.5 | 120 | 10 |
| Example 2 | 52 | 4.2 | 105 | 85 |
| Comparative Example 1 | 48 | 4.6 | 78 | 58,000 |
| Comparative Example 2 | 33 | 4.7 | 101 | 90 |
| Comparative Example 3 | 62 | 4.0 | 108 | 15,000 |
| Comparative Example 4 | 44 | 25 | 101 | 16,000 |

### Experimental Example 1

### (Binder Synthesis)

In a reactor equipped with a stirrer, a thermometer, a reflux condenser, and a nitrogen gas inlet pipe, (meth)acrylamide (50% aqueous solution) and AA (acrylic acid, 80% aqueous solution) were mixed at a molar ratio of 6:4, and a polymerization initiator (ammonium persulfate) was added at 0.1 part by weight part per 100 parts by weight of monomer ((meth)acrylamide and acrylic acid). Then, a reaction was carried out at 80°C for 6 hours to prepare a polymer in an aqueous solution.

Next, the polymer was neutralized with a NaOH aqueous solution to prepare a (meth)acrylic-based binder.

### (Preparation of Negative Electrode Slurry)

The porous silicon-carbon composite particles prepared in Example 1 was used as a negative electrode active material, two types of conductive materials, i.e. particle-type conductive material (SFG6L) and SWCNT (product name: Tuball available from OCSiAl) were used as conductive materials, and the aqueous binder, specifically the (meth)acrylic-based binder produced above, was used, and the negative electrode active material, the particle-type conductive material, the SWCNT, and the aqueous binder were mixed at a ratio of 80:9.6:0.8:9.6 (based on weight ratio) to prepare a negative electrode composition.

A negative electrode slurry was prepared by adding water as a solvent, wherein the content of water was adjusted considering the coatability, viscosity, and solid content. The viscosity of the obtained negative electrode slurry was adjusted to 8000 cps.

### Experimental Example 2

The same procedure as Experimental Example 1 was performed, except that the porous silicon-carbon composite particles prepared in Example 2 instead of Example 1 were used.

### Comparative Experiment Example 1

The same procedure as Experimental Example 1 was performed, except that the porous silicon-carbon composite particles prepared in Comparative Example 1 instead of Example 1 were used.

### Comparative Experiment Example 2

The same procedure as Experimental Example 1 was performed, except that the porous silicon-carbon composite particles prepared in Comparative Example 2 instead of Example 1 were used.

### Comparative Experiment Example 3

The same procedure as Experimental Example 1 was performed, except that the porous silicon-carbon composite particles prepared in Comparative Example 3 instead of Example 1 were used.

### Comparative Experiment Example 4

The same procedure as Experimental Example 1 was performed, except that the porous silicon-carbon composite particles prepared in Comparative Example 4 instead of Example 1 were used.

### <Experimental Example 1: Measurement of amount of H₂ gas generation of Negative Electrode Slurry>

5 g of the negative electrode slurries of Examples 1 and 2 and Comparative Examples 1 to 4 were each placed in a 9 cm x 9 cm pouch, which was then sealed and left at 60°Cfor 24 hours in a constant temperature chamber. Next, the gas generated in the pouch was collected and the amount of generated H₂ gas was quantitatively analyzed using GC/MS. The results are shown in Table 2 below.

### <Experimental Example 2: Coatability of Negative Electrode Slurry>

After electrode manufacturing, the presence of surface stains and pinholes within the electrode (30 cm x 30 cm) were evaluated. An 'O' was marked if no pinholes were observed, and an 'X' was marked if pinholes were present.

### <Experimental Example 3: Viscosity Change>

The shear viscosity was set at a shear rate of 2.5 using a rheometer from TA Instruments, and the viscosity of the negative electrode slurry was measured after preparation and again after leaving it for 24 hours to determine the viscosity reduction rate compared to the initial viscosity.

### <Experimental Example 4: Preparation of Battery and Evaluation of Battery Characteristics>

The negative electrode slurry was coated on a copper foil with a thickness of 18 µm and dried to form an electrode active material layer with a thickness of 50 µm on one surface of the copper foil, which was then punched into a circular shape with a diameter of 14Φ (mm) to prepare a test electrode (negative electrode). A 0.3 mm thick metal lithium foil was used as a positive electrode. A porous polyethylene sheet with a thickness of 0.1 mm was used as a separator. In addition, a solution obtained by dissolving LiPF₆ as a lithium salt at a concentration of 1 mol/L in a mixed solvent of ethylene carbonate (EC) and diethyl carbonate (DEC) with a volume ratio of 1:1 was used as an electrolyte solution.

The negative electrode, the positive electrode, the separator, and the electrolyte solution were sealed in a stainless steel container to prepare a coin cell for evaluation with a thickness of 2 mm and a diameter of 32 mm. The coin cell was charged at a constant current of 0.05 C until the voltage reached 0.01 V and discharged at a constant current of 0.05 C until the voltage reached 1.5 V to obtain the discharge capacity and initial efficiency. The results are shown in Table 2 below.

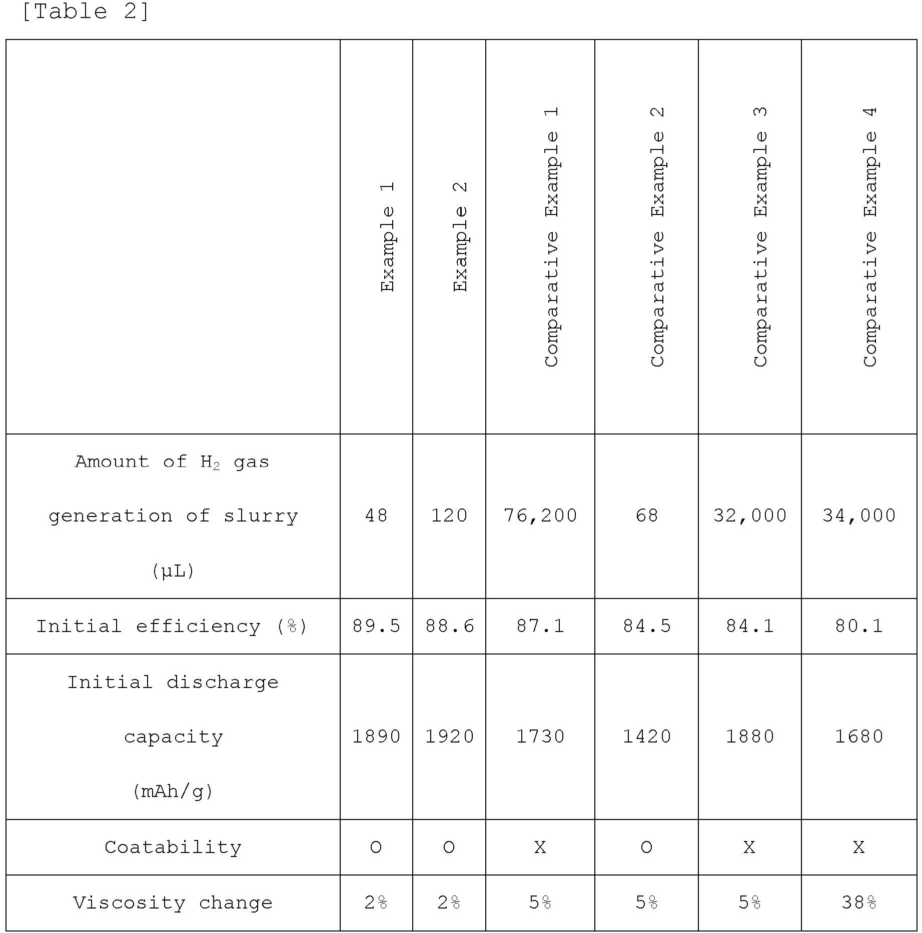

According to Table 2 above, in Examples 1 and 2 in which the porous silicon-carbon composite particles within the scope of the present invention were included, the amount of gas generation of slurry was significantly lower than in the Comparative Examples. In addition, Examples 1 and 2 exhibited superior initial efficiency compared to Comparative Examples, and also exhibited higher initial discharge capacity compared to Comparative Examples 1 and 2. The relatively small amount of gas generation in Comparative Example 2 is due to the high contact angle and low silicon content, and as a result, the battery performance, such as the initial efficiency and initial discharge capacity, was poor. In Comparative Example 3, despite the high silicon content, the initial capacity was measured to be lower than in the Examples having lower silicon content. The slurries of the Examples did not cause electrode defects such as stains or pinholes during electrode coating and did not show a decrease in viscosity due to storage, allowing for the preparation of favorable electrodes.

## Claims

1. A negative electrode active material comprising:
porous silicon-carbon composite particles comprising a porous carbon scaffold and silicon provided on at least a portion of an interior or surface of the porous carbon scaffold,
wherein a content of the silicon is 35 to 60 parts by weight based on 100 parts by weight of the silicon-carbon composite particles,
wherein a specific surface area of the silicon-carbon composite particles is 20 m²/g or less, and
wherein a contact angle of the silicon-carbon composite particles with water, measured on a surface of a flat film after forming the flat film, is 90 degrees or greater.

2. The negative electrode active material of claim 1, wherein an average particle diameter D50 of the porous silicon-carbon composite particles is 1 µm to 20 µm.

3. The negative electrode active material of claim 1,
wherein an average diameter of pores of the porous silicon-carbon composite particles is 0.1 nm to 50 nm.

4. The negative electrode active material of claim 1,
wherein the porous silicon-carbon composite particles have an amount of gas generation of 4,000 µL/g or less when being left at 60°C for 24 hours in a state where they are dispersed in water at a concentration of 30 wt%.

5. The negative electrode active material of claim 1,
wherein a summed amount of carbon and silicon is 90 to 100 parts by weight based on 100 parts by weight of the porous silicon-carbon composite particles.

6. A negative electrode composition for a lithium secondary battery comprising the negative electrode active material of any one of claims 1 to 5.

7. The negative electrode composition for a lithium secondary battery of claim 6, further comprising a binder and a conductive material.

8. The negative electrode composition for a lithium secondary battery of claim 6, wherein an amount of gas generation is 4,000 µL/g or less when being left at 60°C for 24 hours.

9. A negative electrode for a lithium secondary battery, comprising:
a current collector; and
a negative electrode active material layer provided on at least one surface of the current collector and comprising the negative electrode composition of claim 6.

10. A lithium secondary battery comprising:
the negative electrode for a lithium secondary battery of claim 9;
a separator; and
a positive electrode.

11. A battery module comprising the lithium secondary battery of claim 10.

12. A battery pack comprising the battery module of claim 11.

13. A battery pack comprising the lithium secondary battery of claim 10.
